# EUROPÄISCHE PATENTSCHRIFT

(11) **EP 1 332 034 B1**
(45) Veröffentlichungstag und Bekanntmachung des Hinweises auf die Patenterteilung: **10.11.2004**
(21) Anmeldenummer: 01944860.4
(22) Anmeldetag: 09.07.2001
(51) Int. Cl.: B29C 47/42, B29C 47/58

(54) **RING-EXTRUDER-EINZUG**
RING EXTRUDER FEED
DISPOSITIF D'INTRODUCTION D'EXTRUDEUSE ANNULAIRE

(30) Priorität: 10.11.2000 DE 10055772
(43) Veröffentlichungstag der Anmeldung: 06.08.2003
(73) Patentinhaber: Bühler AG, 9240 Uzwil (CH)
(72) Erfinder: INNEREBNER, Federico, CH-8049 Zürich (CH); STURM, Achim, Philipp, CH-9242 Oberuzwil (CH); SCHWEIKLE, Jürgen, CH-9527 Niederhelfenschwil (CH)
(74) Vertreter: Frommhold, Joachim, Dr.
(86) Internationale Anmeldenummer: PCT/CH2001/000430
(87) Internationale Veröffentlichungsnummer: WO 2002/038359

(56) Entgegenhaltungen:
- EP-A- 0 995 565
- DE-A- 19 622 582
- US-A- 4 535 940

## Beschreibung

Die vorliegende Erfindung bezieht sich auf einen Mehrwellen-Extruder zum kontinuierlichen Bearbeiten und/oder Verarbeiten eines Schüttguts, insbesondere eines pulverförmigen, körnigen oder flockigen Produktes, gemäss dem Oberbegriff von Anspruch 1.

Innerhalb der letzten Jahre hat sich die Technologie des Mehrwellen-Extruders etabliert. Vor allem Extruder mit mehreren kranzartig oder kreisartig angeordneten Wellen, die alle mit jeweils zwei benachbarten Wellen kämmen, wie z.B. der 12-wellige RingExtruder®, zeichnen sich durch besonders hohe Durchsätze und enge Verweilzeitspektren aus. Besonders vorteilhaft lassen sich Schüttgüter mit hoher Schüttdichte, wie z.B. Granulat, verarbeiten.

Möchte man jedoch lockere Schüttgüter mit relativ geringer Schüttdichte (ca. 20 bis 60% der Feststoffdichte), wie z.B. Flocken oder Schnitzel, in einem derartigen Mehrwellen-Extruder verarbeiten, so tritt das Problem auf, dass der Extrudereinzug das in loser Schüttung mit viel Luftgehalt ankommende Schüttgut nur mit geringem Durchsatz am Einzug einzuziehen vermag. Auch die im Stand der Technik üblichen Mittel wie Stopfschnecken amd Einzug und/oder Entgasung des Extruderbgehäuses unmittelbar förderabseitig des Einzugs leisten nur unbefriedigende Abhilfe. Somit werden diese Mehrwellen-Extruder, die an sich einen sehr hohen Durchsatz ermöglichen, bei losen Schüttgütern, wie z.B. Polyethylenterephthalat-(PET)-Schnitzeln, die vorwiegend aus Flaschen-Recyclat stammen (RPET), stets "unterfüttert". Ihr Betrieb ist für derartige lose Schüttgüter einzugsbegrenzt.

Der Erfindung liegt daher die Aufgabe zugrunde, bei dem eingangs erwähnten Mehrwellen-Extruder mit kranzartig oder kreisartig angeordneten Wellen das Einzugsverhalten derart zu verbessern, dass der mögliche Durchsatz selbst bei realtiv losen Schüttgütern annähernd erreicht wird und eine Unterfütterung des Extruders weitgehend vermieden wird.

Diese Aufgabe wird durch den Mehrwellen-Extruder nach Anspruch 1 gelöst.

Durch die radiale Aufweitung im Bereich der Zufuhröffnung des Extruders können die meist flockenartigen oder schnitzelartigen Partikel des Schüttgüts, insbesondere von Flaschen-RPET, besser an die fördernden und einziehenden Schneckenetemente im Einzugsbereich herangelangen, wodurch sie die Schneckenelemente besser erfassen und einziehen können. Auf diese Weise können weitaus mehr Flocken oder Schnitzel pro Zeiteinheit in den Extruder eingezogen werden.

Vorzugsweise ist die radiale Ausdehnung der Aufweitung an der Zufuhröffnung maximal und verjüngt sich von dem Umfangsort am Wellenkranz ausgehend, bei dem sich die Zufuhröffnung befindet, entlang des Umfangs des Kranzes bis zu einem nichtaufge-weiteten Umfangsort am Wellenkranz, wo das herkömmliche Spiel zwischen den Wellen des Wellenkranzes und dem Gehäuse vorliegt. Auf diese Weise wird kranzaussenseitig und/oder kranzinnenseitig eine "Einzugstasche" zwischen dem Wellenkranz und der radial äusseren Fläche des Extruder-Hohlraums bzw. zwischen dem Wellenkranz und der radial inneren Fläche des Extruder-Hohlraums gebildet, deren Förderquerschnitt sich entsprechend der zunehmenden Kompression der Schnitzel/Flocken im Verlaufe des Einzugs verringert, wodurch eine beachtliche Steigerung der Einzugsleistung für loses Schüttgut erzielt wird.

Besonders vorteilhaft ist ein erfindungsgemässer Extruder, der gleichsinnig drehende Wellen aufweist und bei dem der Wellenkranz zumindest im Bereich der Zufuhröffnung zwischen dem kranzinnenseitigen Teil des Hohlraums und dem kranzaussenseitigen Teil des Hohlraums eine Durchtrittsöffnung aufweist und sich die Aufweitung in der Umfangsrichtung des Wellenkranzes beiderseits von der Zufuhröffnung weg ersteckt, wobei ein erster Teil der Aufweitung sich zwischen der radial innen liegenden Seite des Hohlraums und dem Wellenkranz erstreckt (innere Einzugstasche) und ein zweiter Teil der Aufweitung sich zwischen der radial aussen liegenden Seite des Hohlraums und dem Wellenkranz erstreckt (äussere Einzugstasche), so dass sich beim Betreiben des Extruders die Oberfläche der in den jeweiligen Teil der Aufweitung ragenden Bearbeitungselemente der gleichsinning drehenden Wellen in der Richtung der Verjüngung der jeweiligen Aufweitung bewegen. Mit dieser Ausführung kann eine besonders hohe Einzugsleistung erzielt werden.

Anstatt einer relativ grossen Durchtrittsöffnung zwischen dem kranzinnenseitigen Hohlraum und dem kranzaussenseitigen Hohlraum, die z.B. durch Weglassen einer ganzen Welle zumindest im Einzugsbereich gebildet wird, kann es auch ausreichend sein, wenn die Durchtrittsöffnung durch nicht dichtkämmende Abschnitte benachbarter Schneckenelemente zumindest im Bereich der Aufweitung gebildet wird.

Dadurch kann zumindest weiter förderabseitig vom Einzug innerhalb des Extruders komprimiertes und ggfs. aufgeschmolzenes Schüttgut von dem radial äusseren Teil des Hohlraums in den radial inneren Teil des Hohlraums gelangen, wodurch der Füllgrad des Extruders ebenfalls gesteigert wird.

Vorteilhaft ist es auch, wenn sich die Aufweitung entlang des Umfangs des Wellenkranzes beiderseits von der Zufuhröffnung ausgehend weg ersteckt und sich jeweils zwischen der radial aussen liegenden Seite des Hohlraums und dem Wellenkranz erstreckt (beidseitige Aussentasche). Obwohl in diesem Fall eine der beiden Aussentaschen nur aufgrund der auf das Schüttgut einwirkenden Schwerkraft und ggfs. "Stopfkraft" und wegen der "falschen" Drehrichtung der Schnecken-elemente weniger stark einziehend wirkt als die andere Einzugstasche mit der "richtigen" Schnecken-Drehrichtung, trägt auch sie - wenn auch in geringerem Ausmass - zur gesamten Einzugsleistung positiv bei.

Bei einer besonders vorteilhaften Weiterbildung des erfindungsgemässen Mehrwellen-Extruders ist die radiale Ausdehnung der Aufweitung im Bereich der Zufuhröffnung maximal und verjüngt sich diese Aufweitung von dem axialen Ort, an dem sich die Zufuhröffnung befindet, entlang der axialen Förderrichtung des Extruders bis zu einem nicht-aufgeweiteten axialen Ort, wo wieder das herkömmliche Spiel zwischen Wellenkranz und Gehäuse vorliegt. Hier ist die mindestens eine Einzugstasche nicht nur in der Umfangsrichtung verjüngt, sonder auch in der axialen Förderrichtung des Extruders. Da die Schneckenelemente beim Ergreifen der Flocken/Schnitzel nicht nur in der Umfangsrichtung einziehend wirken, sondern auch in der Axialrichtung fördernd und somit einziehend wirken, kann mit dieser Ausführung ein optimales Einzugsverhalten erzielt werden.
Insbesondere besteht die sich in der axialen Förderrichtung verjüngende radiale Aufweitung aus mehreren einzelnen Segmentaufweitungen, die jeweils einem der Kreissegmente zugeordnet ist, wobei vorzugsweise die Segmentaufweitungen derart geformt sind, dass die Zwickelbereiche zwischen bzw. neben den jeweiligen Segmentaufweitungen nicht aufgeweitet sind und die einzelnen Segment-aufweitungen voneinander weitgehend getrennt sind.

Zweckmässigerweise sind die Segmentaufweitungen derart geformt, dass die Projektion der Aussenfläche der jeweiligen Segmentaufweitung auf eine zur Axialrichtung senkrechte Ebene etwa die Form einer Sichel hat, wobei die Sichelflächen die Differenzflächen zwischen den Umrissen der aufgweiteten Extruder-"Blume" an dem einen Axialort und den Umrissen der nicht-aufgeweiteten Extruder-"Blume" an dem anderen Axialort sind.

Vorzugsweise sind die Segmentaufweitungen, d.h. deren Aussenflächen jeweils derart geformt, dass sich ihre grösste radiale Aufweitung (bezogen auf den Mittelpunkt der jeweiligen Welle in der Segmentaufweitung) in einer Radialrichtung r erstreckt, die um einen Winkel ϕ in der Drehrichtung der Wellen bezüglich der durch den Mittelpunkt M des Extruders und den Mittelpunkt m der jeweiligen Welle bestimmten Radialrichtung R verdreht ist. Dieser Winkel ϕ liegt etwa zwischen 20° und 60°, vorzugsweise etwa zwischen 30° und 50° liegt. Durch diese Winkel-verschiebung sind die "Blätter" der jeweiligen "Blume" (Schnitt der Aussenflächen der Segmentaufweitungen mit einer zur Axialrichtung senkrechten Ebene) zu "Tränen" verzerrt. Dadurch wird eine signifikante Steigerung der Einzugsleistung erzielt. Zweckmässig ist es auch, wenn mindestens einige der Zwickelbereiche im Umfangsbereich der Aufweitung eine Zwickelaufweitung aufweisen.

Sämtliche bisher genannten Ausführungen können vorteilhaft mit einer an den Mehrwellen-Extruder angepassten Stopfschnecke und/oder mit am Extrudergehäuse Nähe der Zufuhröffnung vorgesehenen Entlüftungsöffnungen kombiniert werden, wobei man an die Zufuhröffnung vorzugsweise einen Druck unterhalb des atmosphärischen Druckes anlegt.

Weitere Vorteile, Merkmale und Anwendungsmöglichkeiten der Erfindung ergeben sich aus der nun folgenden Beschreibung nicht einschränkend aufzufassender bevorzugter Ausführungsbeispiele der Erfindung anhand der Zeichnung, wobei:
- Fig. 1: einen Querschnitt durch einen Mehrwellen-Extruder des Stands der Technik senkrecht zu seiner Längsachse zeigt;
- Fig. 2: einen Querschnitt durch den Mehrwellen-Extruder von Fig. 1 im Bereich seines Einzuges gemäss dem Stand der Technik zeigt;
- Fig. 3: einen zu Fig. 2 analogen Querschnitt durch einen erfindungsgemässen Mehrwellen-Extruder mit einem Einzug gemäss einem ersten Ausführungsbeispiel zeigt;
- Fig. 4: einen zu Fig. 2 analogen Querschnitt durch einen erfindungsgemässen Mehrwellen-Extruder mit einem Einzug gemäss einem zweiten Ausführungsbeispiel zeigt;
- Fig. 5: einen zu Fig. 2 analogen Querschnitt durch einen erfindungsgemässen Mehrwellen-Extruder mit einem Einzug gemäss einem dritten Ausführungsbeispiel zeigt;
- Fig. 6A, 6B und 6C: verschiedene Perspektivansichten des Gehäuseabschnitts vom Einzugsbereich des erfindungsgemässen Mehrwellen-Extruders gemäss einem vierten Ausführungsbeispiel zeigen; und
- Fig. 6D: eine Ansicht des Gehäuseabschnitts vom Einzugsbereich des erfindungsgemässen Mehrwellen-Extruders gemäss dem vierten Ausführungsbeispiel mit Blick in der Extruder-Förderrichtung zeigt.

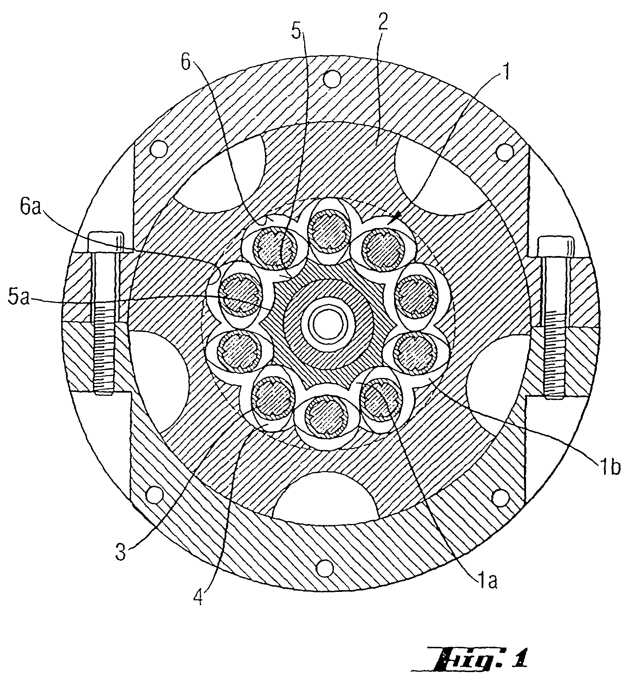

Fig. 1 ist ein Querschnitt senkrecht zur axialen Förderrichtung durch einen Mehrwellen-Extruder des Stands der Technik. Dieser Extruder weist zehn Wellen 3 auf, die in einem Kreis angeordnet sind und einen Wellenkranz 3,... bilden. Jede Welle 3 trägt mit ihr drehfest verbundene Bearbeitungselemente 4, wie z.B. Schneckenelemente oder Knetelemente (nicht gezeigt). Der Wellenkranz 3,... befindet sich in einem Hohlraum 1 des Extrudergehäuses 2. Sowohl die radial innen liegende Fläche 5 als auch die radial aussen liegende Fläche 6 des Hohlraums 1 enthalten zylindermantelförmig ausgebildete Vertiefungen, die sich in der axialen Förderrichtung des Extruders erstrecken und im Querschnitt als innenliegendes Kreissegment 5a und als aussenliegendes Kreissegment 6a erscheinen. Diese Vertiefungen bzw. Kreissegmente 5a dienen als Führung für die mit den Verarbeitungselementen 4 versehenen Wellen 3. Der Hohlraum 1 wird durch den Wellenkranz 3,... in einen kranzinnenseitigen Teil 1a und einen kranzaussenseitigen Teil 1b unterteilt.

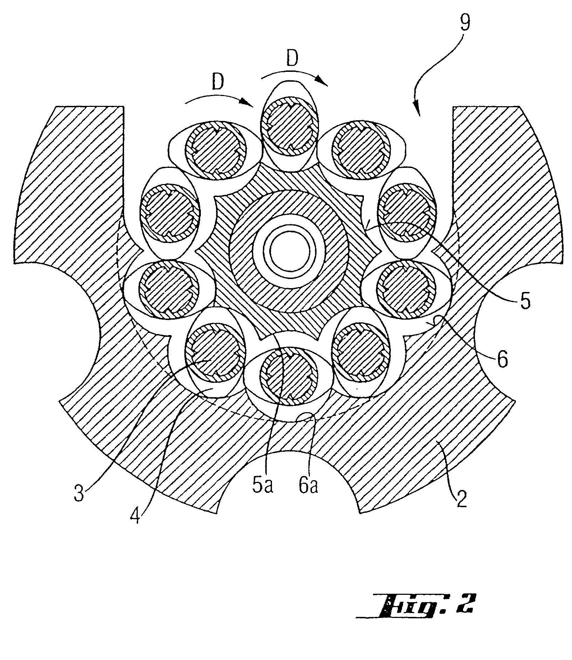

Fig. 2 ist ein Querschnitt durch den Mehrwellen-Extruder des Stands der Technik von Fig. 1 im Bereich seines Einzugs. Gleiche Bezugsziffern in Fig. 2 und Fig.1 beziehen sich auf jeweils gleiche oder entsprechende Elemente. Die Zufuhröffnung 9 erstreckt sich in der Umfangsrichtung über fünf der insgesamt zehn Wellen 3 und in der Axialrichtung (senkrecht zur Zeichenebene) typischerweise über eine Strecke von etwa 1 bis 3 Schneckenwindungen je nach Steilheit der Windungen. Sämtliche Wellen 3 drehen sich gleichsinnig in der durch den Pfeil D angegebenen Richtung.

Wird nun ein Schüttgut über die Zufuhröffnung 9 dem Extruder zugeführt, so wird es durch die sich drehenden Wellen 3 mit ihren Schneckenelementen in den sich in der Axialrichtung anschliessenden Extruderhohlraum 1 (siehe Fig. 1) eingezogen. Bei Schüttgütern mit hoher Schüttdichte, wie z.B. körnigen Materialien, arbeitet der Einzug zufriedenstellend. Wenn es sich bei dem einzuziehenden Schüttgut jedoch um ein Schüttgut geringer Schüttdichte handelt, wie z.B. bei einem flockigen oder porösen Material, dessen Flocken auch noch in sich verwunden sind, so vermag diese Einzugsgeometrie eines Mehrwellen-Extruders des Stands der Technik nur eine sehr unbefriedigende Menge an Material einzuziehen, die weit unter dem aufgrund des Hohlraums 1 und der Zahl der Wellen 3 möglichen Durchsatz liegt. Diese "Unterfütterung" des Extruders tritt insbesondere bei der Wiederverwertung von Schnitzeln aus Polyethylenterephthalat-Flaschenrecyclat (RPET) auf und ist besonders störend, da nur ein Bruchteil des möglichen Durchsatzes verarbeitet werden kann.

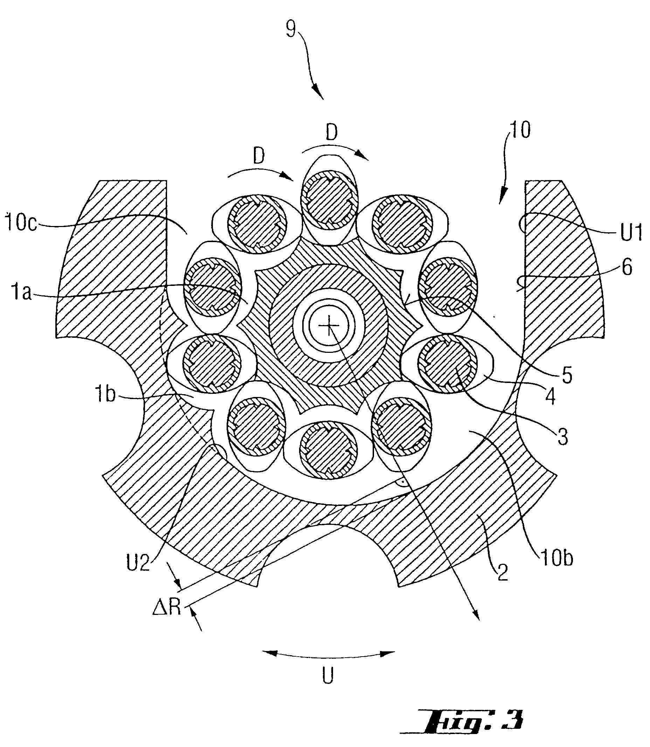

Fig. 3 ist ein zu Fig. 2 analoger Querschnitt durch den erfindungsgemässen Mehrwellen-Extruder gemäss einem ersten Ausführungsbeispiel. Gleiche Bezugsziffern in Fig. 3 und den vorherigen Figuren beziehen sich auf jeweils gleiche oder entsprechende Elemente. Die Zufuhröffnung 9 ist hier im Gegensatz zum Stand der Technik auf einer ihren Seiten entlang der Umfangsrichtung U aufgeweitet. Diese Aufweitung 10 besteht im wesentlichen aus einem radial ausserhalb des Wellenkranzes 3,... liegenden Teil 10b, der sich ausgehend von einem Umfangsort U1 bei der Zufuhröffnung entlang der Umfangsrichtung U beinahe um den gesamten Wellenkranz 3,... bis zu einem Umfangsort U2, an dem praktisch keine Aufweitung mehr vorliegt, erstreckt. Die Aufweitung 10b ist entlang der Umfangsrichtung verjüngt, d.h., ihre radiale Ausdehnung ΔR nimmt mit zunehmender Umfangsposition zwischen U1 und U2 ab. Dadurch lässt sich die Einzugsleistung des Extruders bei dem oben erwähnten flockenartigen oder schnitzelartigen Schüttgut steigern, und man erhält zufriedenstellende Füllgrade und Durchsätze auch bei derartigen Materialien. Um neben der Auffüllung des kranzaussenseitigen Teils 1b des Hohlraums 1 (siehe Fig. 1) auch eine Auffüllung des kranzinnenseitigen Teils 1a des Hohlraums zu erzielen, sind die durch ihre Bearbeitungselemente 4 ineinander-greifenden Wellen 3 nicht dichtkämmend ausgeführt.

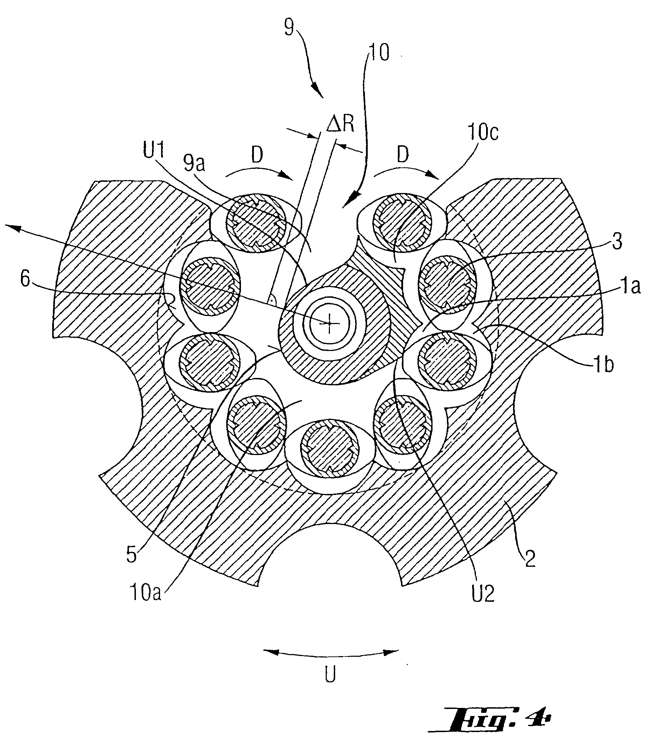

Fig. 4 ist ebenfalls ein zu Fig. 2 analoger Querschnitt durch den erfindungsgemässen Mehrwellen-Extruder gemäss einem zweiten Ausführungsbeispiel. Gleiche Bezugsziffern in Fig. 4 und den vorherigen Figuren beziehen sich wieder auf jeweils gleiche oder entsprechende Elemente. Die Zufuhröffnung 9 ist hier zumindest im Einzugsbereich, wo eine Welle weggelassen ist, über eine Durchtrittsöffnung 9a mit dem kranzinnenseitigen Teil 1a des Hohlraums 1 verbunden, der entlang der Umfangsrichtung U aufgeweitet ist. Die Aufweitung 10 besteht hier im wesentlichen aus einem radial innerhalb des Wellenkranzes 3,... liegenden Teil 10a, der sich auch einem Umfangsort U1 bei der Zufuhröffnung entlang der Umfangsrichtung U fast um den gesamten Wellenkranz 3,... bis zu einem Umfangsort U2, an dem praktisch keine Aufweitung mehr vorliegt, erstreckt. Die Aufweitung 10a ist ebenfalls entlang der Umfangsrichtung verjüngt, d.h., ihre radiale Ausdehnung ΔR nimmt mit zunehmender Umfangsposition zwischen U1 und U2 ab. Auch bei dieser Ausführung der Aufweitung lässt sich die Einzugsleistung des Extruders bei dem oben erwähnten flockenartigen oder schnitzelartigen Schüttgut steigern, und um neben der Auffüllung des kranzinnenseitigen Teils 1a des Hohlraums 1 (siehe Fig. 1) auch eine Auffüllung des kranzaussenseitigen Teils 1b des Hohlraums zu erzielen, sind die durch ihre Bearbeitungselemente 4 ineinandergreifenden Wellen 3 auch hier nicht dichtkämmend ausgeführt.

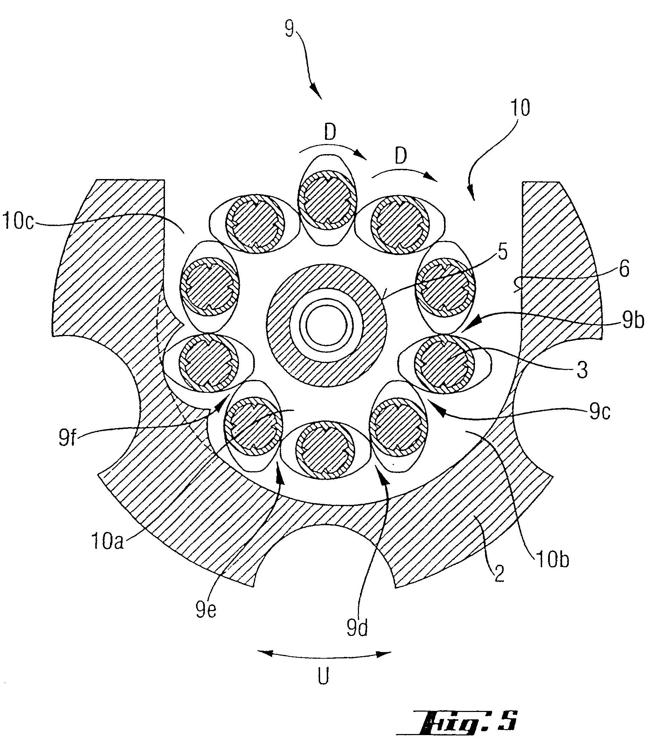

Fig. 5 ist ebenfalls ein zu Fig. 2 analoger Querschnitt durch den erfindungsgemässen Mehrwellen-Extruder gemäss einem dritten Ausführungsbeispiel. Gleiche Bezugsziffern in Fig. 5 und den vorherigen Figuren beziehen sich wieder auf jeweils gleiche oder entsprechende Elemente. Die kranzaussenseitige Aufweitung 10b ist wie bei dem ersten Ausführungsbeispiel ausgebildet, während zusätzlich der kranzinnenseitige Teil 1a des Hohlraums 1 zu einer Einzugstasche 10a aufgeweitet ist, die jedoch im Gegensatz zu der Einzugstasche 10a des zweiten Ausführungsbeispiels über den gesamten Umfang U eine konstante radiale Ausdehnung aufweist. Die zehn Wellen 3 des Wellenkranzes 3,... sind an den Abschnitten 9b, 9c, 9d, 9e und 9f nicht dichtkämmend ausgebildet, so dass über die Einzugstasche 10b eingezogenes Schüttgut nach seiner Zerkleinerung und/oder Aufschmelzung nach und nach auch in den kranzinnenseitigen Teil 1a des Hohlraums gelangen kann.

Sowohl in dem ersten, dem zweiten und dem dritten Aussführungsbeispiel bilden die Teilbereiche 10a und/oder 10b der Aufweitung 10 eine Einzugstasche, in die das einzuziehende lockere Schüttgut durch die Schwerkraft und vor allem durch die Drehung D der Wellen 3 unter zunehmender Komprimierung eingezogen wird. Nebend den "Haupteinzugsbereichen" 10a bzw. 10b trägt auch jeweils der "Nebeneinzugsbereich" 10c zur gesamten Einzugsleistung bei. Die Einzugstaschen 10a, 10b und 10c weisen zusätzlich eine Verjüngung (nicht gezeigt) in der axialen Förderrichtung (senkrecht zur Zeichenebene) auf. Dies trägt ebenfalls zur Steigerung der Einzugsleistung bei.

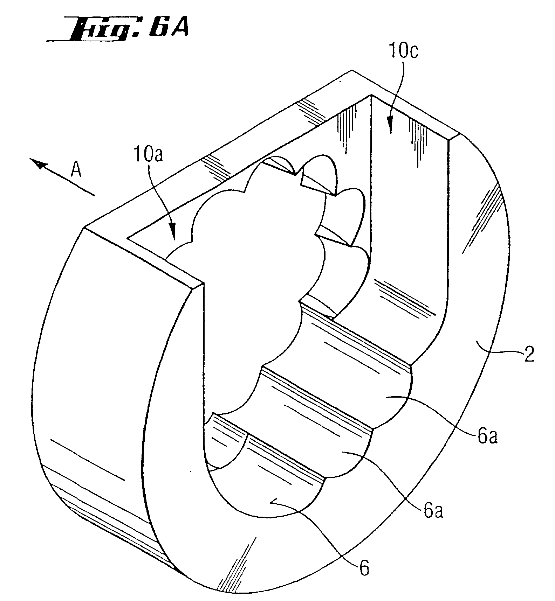

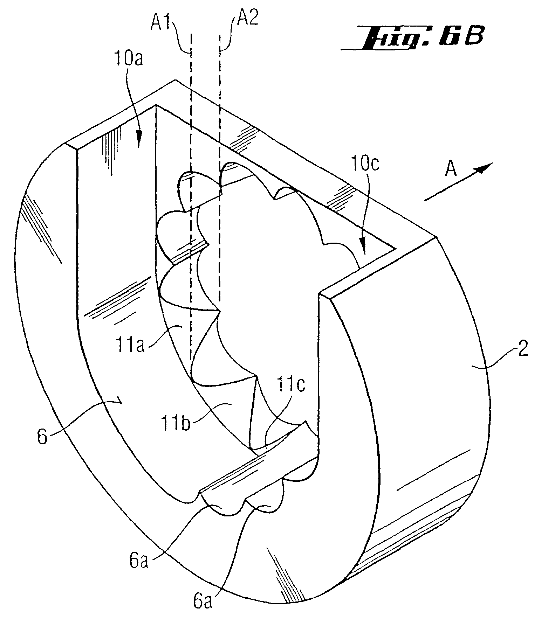

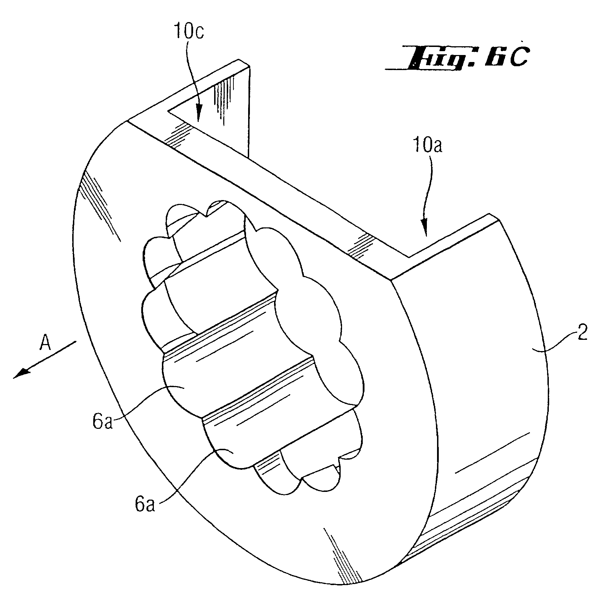

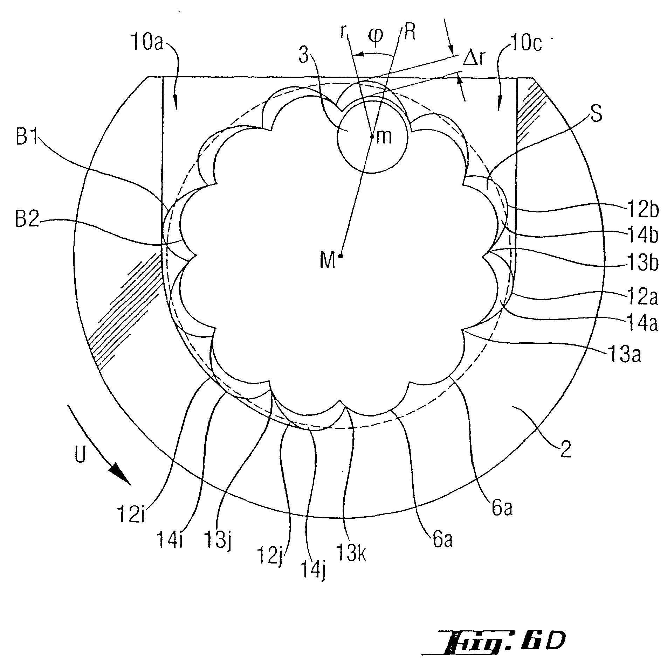

Fig. 6A, 6B, 6C und 6D sind verschiedene Ansichten des Gehäuseabschnitts vom Einzugsbereich des erfindungsgemässen Mehrwellen-Extruders gemäss einem vierten Ausführungsbeispiel der Erfindung. Der Kern des Extruders sowie die Wellen sind nicht gezeigt. Gleiche Bezugsziffern wie in den vorherigen Figuren beziehen sich wieder auf jeweils gleiche oder entsprechende Elemente. Im Gegensatz zum ersten, zweiten und dritten Ausführungsbeispiel enthält der Extruder des vierten Ausführungsbeispiels zwölf Wellen (nicht gezeigt).

Fig. 6A zeigt in einer Perspektivansicht den Gehäuseabschnitt 2 für den Einzugsbereich des 12-welligen Extruders. Im Bereich der "Haupteinzugstasche" 10a und der "Nebeneinzugstasche" 10c ist mehr bzw. weniger Material von der aussen liegenden Fläche 6 des Hohlraums entfernt, so dass zusammen mit dem Wellenkranz (nicht gezeigt) eine grössere und eine kleinere Einzugstasche 10a, 10c gebildet werden. Bis auf zwei Kreissegmente 6a der aussen liegenden Fläche 6 des Hohlraums sind alle anderen Kreissegmente "eingeebnet".

Fig. 6B zeigt in einer weiteren Perspektivansicht den Gehäuseabschnitt 2 für den Einzugsbereich des 12-welligen Extruders. Im Bereich der "Haupteinzugstasche" 10a und der "Nebeneinzugstasche" 10c ist mehr bzw. weniger Material von der aussen liegenden Fläche 6 des Hohlraums entfernt, so dass zusammen mit dem Wellenkranz (nicht gezeigt) eine grössere und eine kleinere Einzugstasche 10a, 10c gebildet werden. Wie man in Fig. 6B am besten erkennt, sind zusätzlich zu den Aufweitungen 10a und 10c in der Umfangsrichtung U auch noch Zwickel-aufweitungen 11a, 11b und 11c in der Axialrichtung A vorgesehen. Dadurch wird eine Verjüngung der entsprechenden Kreissegmente der Aussenfläche 6 erzielt, die sich zwischen dem Axialort A1 und dem Axialort A2 erstreckt.

Fig. 6C ist eine weitere Perspektivansicht des Gehäuseabschnitts 2 für den Einzugsbereich des 12-welligen Extruders, und Fig. 6D ist dessen Orthogonal-Ansicht mit Blick in der Extruder-Förderrichtung A.

Fig. 6D zeigt den Gehäuseabschnitt 2 derart, dass seine "Blume", die durch die Kantenlinien der vielen Kreissegmente ("Blätter") gebildet wird, deutlich erkennbar ist. Genauer gesagt, besitzt der Gehäuseabschnitt 2 eine aufgeweitete Blume B1 (in Fig. 6D die vorne liegende Kantenlinie) und eine nicht-aufgeweitete Blume B2 (in Fig. 6D die hinten liegende Kantenlinie), zwischen denen sich die Segment-Aussen-flächen 14a, 14b, ...., 14i, 14j der Segmentaufweitungen 12a, 12b, ..., 12j befinden. Die Zwickelbereiche 13a, 13b, ..., 13j, 13k neben bzw. zwischen den Segment-aufweitungen sind in dieser Ausführung nicht aufgeweitet. Die Differenzfläche zwischen der vorderen Blume B1 und der hinteren Blume B2 stellt eine sichelförmige Projektion S der Segment-Aussenflächen im Bereich der Segmentaufweitungen dar.

Um das Einzugsverhalten zu verbessern, sind die Segmentaufweitungen 12a, 12b, ..., 12j jeweils derart geformt, dass sich ihre grösste radiale Aufweitung Δr, bezogen auf den Mittelpunkt m der jeweiligen Welle 3, in einer Radialrichtung r erstreckt, die um einen Winkel ϕ in der Drehrichtung D der Wellen 3 bezüglich der durch den Mittelpunkt M des Extruders und den Mittelpunkt m der jeweiligen Welle 3 bestimmten Radialrichtung R verdreht ist. Dadurch erscheint die vordere Blume B1 als ein Kreis aus "Tränen" bzw. erscheinen die projizierten "Mondsicheln" S etwas verzerrt.

### Bezugszeichen

- 1: Hohlraum
- 1a: kranzinnenseitiger Teil des Hohlraums
- 1b: kranzaussenseitiger Teil des Hohlraums
- 2: Extrudergehäuse
- 3: Welle
- 3,...: Wellenkranz
- 4: Bearbeitungselement
- 5: innen liegende Fläche des Hohlraums
- 5a: Kreissegment der Innenfläche des Hohlraums
- 6: aussen liegende Fläche des Hohlraums
- 6a: Kreissegment der Aussenfläche des Hohlraums
- 9: Zufuhröffnung
- 9a: Durchtrittsöffnung
- 9b: nicht dichtkämmender Abschnitt
- 9c: nicht dichtkämmender Abschnitt
- 9d: nicht dichtkämmender Abschnitt
- 9e: nicht dichtkämmender Abschnitt
- 9f: nicht dichtkämmender Abschnitt
- 10: Aufweitung
- 10a: innerer Teil der Aufweitung
- 10b: äusserer Teil der Aufweitung
- 11a: Zwickelaufweitung
- 11b: Zwickelaufweitung
- 11c: Zwickelaufweitung
- 12a: Segmentaufweitung
- 12b: Segmentaufweitung
- 12c: Segmentaufweitung
- 12d: Segmentaufweitung
- 12e: Segmentaufweitung
- 12f: Segmentaufweitung
- 12g: Segmentaufweitung
- 12h: Segmentaufweitung
- 12i: Segmentaufweitung
- 12j: Segmentaufweitung
- 13a: Zwickelbereich
- 13b: Zwickelbereich
- 13c: Zwickelbereich
- 13d: Zwickelbereich
- 13e: Zwickelbereich
- 13f: Zwickelbereich
- 13g: Zwickelbereich
- 13h: Zwickelbereich
- 13i: Zwickelbereich
- 13j: Zwickelbereich
- 13k: Zwickelbereich
- 14a: Segment-Aussenfläche
- 14b: Segment-Aussenfläche
- 14c: Segment-Aussenfläche
- 14d: Segment-Aussenfläche
- 14e: Segment-Aussenfläche
- 14f: Segment-Aussenfläche
- 14g: Segment-Aussenfläche
- 14h: Segment-Aussenfläche
- 14i: Segment-Aussenfläche
- 14j: Segment-Aussenfläche
- A: Axialrichtung
- U: Umfangsrichtung
- ΔR: radiale Ausdehnung der Aufweitung
- U1: Umfangsort bei Zufuhröffnung
- U2: Umfangsort ohne Aufweitung
- A1: Axialort bei Zufuhröffnung
- A2: Axialort ohne Aufweitung
- B1: aufgeweitete Blume
- B2: nicht-aufgeweitete Blume
- D: Drehrichtung der Wellen
- ΔR: radiale Ausdehnung der Aufweitung
- Δr: radiale Ausdehnung der Segmentaufweitung
- M: Mittelpunkt des Extruders
- m: Mittelpunkt der Welle
- ϕ: Winkelrichtung der Ausdehnung Δr
- S: sichelförmige Projektion

## Patentansprüche

1. Mehrwellen-Extruder zum kontinuierlichen Bearbeiten und/oder Verarbeiten eines Schüttguts, insbesondere eines pulverförmigen, körnigen oder flockigen Produktes, mit mehreren in einem Hohlraum (1) eines Extrudergehäuses (2) kranzartig angeordneten Wellen (3), die parallel zur Axialrichtung (A) des Extruders verlaufen, wobei die Schnittpunkte, welche von den Achsengeraden der jeweiligen Wellen (3) mit einer gedachten Ebene senkrecht zur Axialrichtung (A) gebildet werden, auf einer Kranzlinie liegen und wobei jede der Wellen eine Anzahl axial aufeinanderfolgender Bearbeitungselemente (4) trägt, von denen zumindest ein Teil fördernd wirkende Elemente sind und mit denen benachbarte Wellen kämmend ineinandergreifen, wobei das Extrudergehäuse (2) an der radial innen (5) und der radial aussen (6) liegenden Fläche des Hohlraums (1) mit achsparallelen konkaven Kreissegmenten (5a, 6a) versehen ist, die als Führung für die achsparallelen Wellen (3) mit ihren Bearbeitungselementen (4) an der Innenseite (5) bzw, an der Aussenseite (6) des Wellenkranzes (3,...) dienen, wobei der Hohlraum (1) an seinem ersten axialen Ende eine Zufuhröffnung (9) und an seinem anderen axialen Ende eine Austrittsöffnung für das zu verarbeitende Produkt aufweist, **dadurch gekennzeichnet, dass** der sich im Bereich der Zufuhröffnung (9) befindende axiale Teilbereich des die Wellen (3) enthaltenden Hohlraums (1) radial aufgeweitet ist und sich die radiale Aufweitung (10) entlang eines Teils des Wellenkranzes (3,...) in dessen Umfangsrichtung (U) erstreckt.

2. Mehrwellen-Extruder nach Anspruch 1, **dadurch gekennzeichnet, dass** die radiale Ausdehnung (ΔR) der Aufweitung (10) an der Zufuhröffnung (9) maximal ist und sich von dem Umfangsort (U1) am Wellenkranz (3,...) ausgehend, bei dem sich die Zufuhröffnung (9) befindet, entlang des Umfangs des Kranzes bis zu einem nicht-aufgeweiteten Umfangsort (U2) am Wellenkranz (3,...) verjüngt.

3. Mehrwellen-Extruder nach Anspruch 2, **dadurch gekennzeichnet, dass** der Extruder gleichsinnig drehende Wellen (3) aufweist und der Wellenkranz (3,...) zumindest im Bereich der Zufuhröffnung (9) zwischen dem kranzinnenseitigen Teil (1a) des Hohlraums (1) und dem kranzaussenseitigen Teil (1b) des Hohlraums (1) eine Durchtrittsöffnung (9a) aufweist und sich die Aufweitung (10) in der Umfangsrichtung des Wellenkranzes (3,...) beiderseits von der Zufuhröffnung (9) weg ersteckt, wobei ein erster Teil (10a) der Aufweitung (10) sich zwischen der radial innen liegenden Fläche (5) des Hohlraums (1) und dem Wellenkranz (3,...) erstreckt und ein zweiter Teil (10b) der Aufweitung (10) sich zwischen der radial aussen liegenden Fläche (6) des Hohlraums (1) und dem Wellenkranz (3,...) erstreckt, so dass sich beim Betreiben des Extruders die Oberfläche der in den jeweiligen Teil der Aufweitung (10a, 10b) ragenden Bearbeitungselemente (4) der gleichsinning drehenden Wellen (3) in der Richtung der Verjüngung der jeweiligen Aufweitung (10a, 10b) bewegen.

4. Mehrwellen-Extruder nach Anspruch 3, **dadurch gekennzeichnet, dass** die Durchtrittsöffnung durch nicht dichtkämmende Abschnitte (9b, 9c, 9d, 9e, 9f) benachbarter Bearbeitungselemente (3, 4) zumindest im Bereich der Aufweitung (10) gebildet sind.

5. Mehrwellen-Extruder nach Anspruch 2, **dadurch gekennzeichnet, dass** sich die Aufweitung (10) entlang des Umfangs (U) des Wellenkranzes (3,...) beiderseits von der Zufuhröffnung (9) weg ersteckt und sich jeweils zwischen der radial aussen liegenden Fläche (6) des Hohlraums (1) und dem Wellenkranz (3,...) erstreckt.

6. Mehrwellen-Extruder nach einem der vorhergehenden Ansprüche, **dadurch gekennzeichnet, dass** die radiale Ausdehnung (ΔR) der Aufweitung (10) im Bereich der Zufuhröffnung (9) maximal ist und sich die Aufweitung (10) von dem axialen Ort (A1), an dem sich die Zufuhröffnung (9) befindet, entlang der axialen Förderrichtung (A) des Extruders bis zu einem nicht-aufgweiteten axialen Ort (A2) verjüngt.

7. Mehrwellen-Extruder nach Anspruch 6, **dadurch gekennzeichnet, dass** die sich in der axialen Förderrichtung verjüngende radiale Aufweitung aus mehreren einzelnen Segmentaufweitungen (12a, 12b, ..., 12j) besteht, die jeweils einem der Kreissegmente (6a) zugeordnet ist.

8. Mehrwellen-Extruder nach Anspruch 7, **dadurch gekennzeichnet, dass** die Segmentaufweitungen (12a, 12b, ...., 12j) derart geformt sind, dass die Zwickelbereiche (13a, 13b, ..., 13k) zwischen bzw. neben den jeweiligen Segmentaufweitungen (12a, 12b, ..., 12j) nicht aufgeweitet sind.

9. Mehrwellen-Extruder nach Anspruch 8, **dadurch gekennzeichnet, dass** die Segmentaufweitungen (12a, 12b, ..., 12j) derart geformt sind, dass die Projektion der Aussenfläche (14a, 14b, ..., 14j) der jeweiligen Segmentaufweitung (12a, 12b, ..., 12j) auf eine zur Axialrichtung senkrechte Ebene (Zeichenebene) etwa die Form einer Sichel (S) hat.

10. Mehrwellen-Extruder nach Anspruch 8 oder 9, **dadurch gekennzeichnet, dass** die Segmentaufweitungen (12a, 12b, ..., 12j) jeweils derart geformt sind, dass sich ihre grösste radiale Aufweitung Δr, bezogen auf den Mittelpunkt m der jeweiligen Welle (3), in einer Radialrichtung r erstreckt, die um einen Winkel ϕ in der Drehrichtung D der Wellen (3) bezüglich der durch den Mittelpunkt M des Extruders und den Mittelpunkt m der jeweiligen Welle (3) bestimmten Radialrichtung R verdreht ist.

11. Mehrwellen-Extruder nach Anspruch 10, **dadurch gekennzeichnet, dass** der Winkel ϕ etwa zwischen 20° und 60° liegt.

12. Mehrwellen-Extruder nach Anspruch 11, **dadurch gekennzeichnet, dass** der Winkel ϕ etwa zwischen 30° und 50° liegt.

13. Mehrwellen-Extruder nach einem der vorhergehenden Ansprüche, **dadurch gekennzeichnet, dass** mindestens einige der Zwickelbereiche (13a, 13b, ..., 13k) im Umfangsbereich der Aufweitung (10) eine Zwickelaufweitung (11a, 11b, 11c) aufweisen.

14. Mehrwellen-Extruder nach einem der Ansprüche 8 bis 13, **dadurch gekennzeichnet, dass** an der Zufuhröffnung (9) eine Stopfschnecke angebracht ist.

15. Mehrwellen-Extruder nach einem der vorhergehenden Ansprüche, **dadurch gekennzeichnet, dass** das Extrudergehäuse (2) in der Nähe der Zufuhröffnung (9) Entlüftungsöffnungen aufweist.

16. Mehrwellen-Extruder nach Anspruch 8, **dadurch gekennzeichnet, dass** an der Zufuhröffnung (9) ein Druck unterhalb des atmosphärischen Druckes anlegbar ist.

## Claims

1. A multi-screw extruder for continuously machining and/or moulding bulk material, in particular a powdery, granular or flocculent product, with several screws (3) running parallel to the axial direction (A) of the extruder arranged in a ring inside a cavity (1) of an extruder casing (2), wherein the points of intersection formed by the axial lines of the respective screws (3) with an imaginary plane perpendicular to the axial direction (A) lie on a ring line, and wherein each of the screws carries a number of axially consecutive machining elements (4), of which at least a portion are conveying elements, and with which adjacent screws intermesh, wherein the extruder casing (2) is provided at the radially inner (5) and radially outer (6) lying surface of the cavity (1) with axially parallel, concave circular segments (5a, 6a), which serve as a guide for the axially parallel screws (3) with their machining elements (4) on the inside (5) or outside (6) of the screw ring (3, ...), wherein the cavity (1) has a feed port (9) at its first axial end, and an outlet at its other axial end for the product to be processed, **characterised by** the fact that the axial partial area of the cavity (1) containing the screws (3) located in the area of the feed port (9) is radially expanded, and the radial expansion (10) extends along a portion of the screw ring (3, ...) in its peripheral direction (U).

2. The multi-screw extruder as claimed in Claim 1, **characterised in that** the radial dilatation (ΔR) of the expansion (10) is at its maximum at the feed port (9), and narrows proceeding from the peripheral location (U1) on the screw ring (3, ...) where the feed port (9) is located, along the periphery of the ring up to an unexpanded peripheral location (U2) on the screw ring (3, ...).

3. The multi-screw extruder as claimed in Claim 2, **characterised in that** the extruder has screws (3) rotating in the same direction, and the screw ring (3, ...) has a through hole (9a) at least in the area of the feed port (9) between the inner ring section (1a) of the cavity (1) and the outer ring section (1b) of the cavity (1), and the expansion (10) extends in the peripheral direction of the screw ring (3, ...) on either side away from the feed port (9), wherein a first section (10a) of the expansion (10) extends between the radially internal surface (5) of the cavity (1) and the screw ring (3, ...), and a second section (10b) of the expansion (10) extends between the radially external surface (6) of the cavity (1) and the screw ring (3, ...), so that the surface of the machining elements (4) of the screws (3) rotating in the same direction that extend into the respective section of the expansion (10a, 10b) move in the direction in which the respective expansion (10a, 10b) narrows during extruder operation.

4. The multi-screw extruder as claimed in Claim 3, **characterised in that** the through hole is formed by sections (9b, 9c, 9d, 9e, 9f) of adjacent machining elements (3, 4) that do not tightly intermesh, at least in the area of the expansion (10).

5. The multi-screw extruder as claimed in Claim 2, **characterised in that** the expansion (10) extends along the periphery (U) of the screw ring (3, ...) on either side away from the feed port (9), and extends between the radially outer surface (6) of the cavity (1) and the screw ring (3, ...).

6. The multi-screw extruder according to one of the preceding claims, **characterised in that** the radial dilatation (ΔR) of the expansion (10) is at its maximum in the area of the feed port (9), and the expansion (10) narrows from the axial location (A1) where the feed port (9) is situated, along the axial conveying direction (A) of the extruder, to an unexpanded axial location (A2).

7. The multi-screw extruder as claimed in Claim 6, **characterised in that** the radial expansion narrowing in the axial conveying direction consists of several individual segment expansions (12a, 12b, ..., 12j), which are each allocated to one of the circular segments (6a).

8. The multi-screw extruder as claimed in Claim 7, **characterised in that** the segment expansions (12a, 12b, ..., 12j) are designed in such a way that the wedge zones (13a, 13b, ..., 13k) are not expanded between or next to the respective segment expansions (12a, 12b, ..., 12j).

9. The multi-screw extruder as claimed in Claim 8, **characterised in that** the segment expansions (12a, 12b, ..., 12j) are designed in such a way that the projection of the outer surface (14a, 14b, ..., 14j) of the respective segment expansion (12a, 12b, ..., 12j) has roughly the shape of a sickle (S) in a plane (drawing plane) perpendicular to the axial direction.

10. The multi-screw extruder as claimed in Claim 8 or 9, **characterised in that** the segment expansions (12a, 12b, ..., 12j) are each designed in such a way that their greatest radial expansion Δr relative to the relative to the midpoint m of the respective screw (3) extends in a radial direction r twisted by an angle ϕ in the rotational direction D of the screws (3) relative to the radial direction R determined by the midpoint M of the extruder and the midpoint m of the respective screw (3).

11. The multi-screw extruder as claimed in Claim 10, **characterised in that** the angle ϕ lies roughly between 20° and 60°.

12. The multi-screw extruder as claimed in Claim 11, **characterised in that** the angle ϕ lies roughly between 30° and 50°.

13. The multi-screw extruder as claimed in any one of the preceding claims, **characterised in that** at least some of the wedge zones (13a, 13b, ..., 13k) have a wedge expansion (11a, 11b, 11c) in the peripheral area of the expansion (10).

14. The multi-screw extruder as claimed in any one of Claims 8 to 13, **characterised in that** a stuffing screw is secured to the feed port (9).

15. The multi-screw extruder according to one of the preceding claims, **characterised in that** the extruder casing (2) has ventilation holes near the feed port (9).

16. The multi-screw extruder as claimed in Claim 8, **characterised in that** a pressure below atmospheric pressure can be applied to the feed port (9).

## Revendications

1. Extrudeuse à arbres multiples pour l'usinage et/ou la mise en oeuvre d'une marchandise en vrac, notamment d'un produit pulvérulent, granuleux ou floconneux, avec plusieurs arbres (3) disposés en forme de couronne dans une cavité (1) d'un carter d'extrudeuse (2) qui s'étendent à la parallèle de la direction axiale (A) de l'extrudeuse, les intersections qui sont formées par les droites axiales (A) de l'arbre (3) respectif sur un plan imaginaire, à la perpendiculaire de la direction axiale (A) se situant sur une ligne de la couronne et chacun des arbres portant un nombre d'éléments d'usinage successifs en direction axiale (4) dont au moins une partie sont des éléments de transport et s'engrènent dans ceux de l'arbre voisin, le carter de l'extrudeuse (2) étant muni sur la surface radiale intérieure (5) et sur la surface radiale extérieure (6) de la cavité (1) de segments de cercle (5a, 6a) concaves parallèlement à l'axe, destinés à guider les arbres (3) parallèles dans l'axe avec leurs élément d'usinage (4) sur la face interne (5) ou sur la face externe (6) de la couronne d'arbres (3, ...), la cavité (1) étant munie sur sa première extrémité axiale d'un orifice d'alimentation (9) et sur son autre extrémité axiale d'un orifice de sortie pour le produit à usiner, **caractérisée en ce que** la zone partielle axiale de la cavité (1) renfermant les arbres (3) qui se situe dans la zone de l'orifice d'alimentation (9) est évasée en direction radiale et que l'évasement radial (10) s'étend le long d'une partie de la couronne d'arbres (3, ...) dans la direction périphérique (U) de cette dernière.

2. Extrudeuse à arbres multiples selon la revendication 1, **caractérisée en ce que** l'extension radiale (ΔR) de l'évasement (10) est maximale à l'orifice d'alimentation (9) et en partant de l'endroit périphérique (U1) sur la couronne d'arbres (3, ...) où se trouve l'orifice d'alimentation (9), elle se rétrécit le long de la périphérie de la couronne, jusqu'à un endroit périphérique non évasé (U2) sur la couronne d'arbres (3, ...).

3. Extrudeuse à arbres multiples selon la revendication 2, **caractérisée en ce que** l'extrudeuse est munie d'arbres (3) rotatifs dans le même sens et au moins dans la zone de l'orifice d'alimentation (9), la couronne d'arbres (3, ...) est munie d'un orifice de passage (9a) entre la partie (1a) de la cavité (1) située côté interne de la couronne et la partie (1b) de la cavité (1) située côté externe de la couronne et l'évasement (10) dans la direction périphérique de la couronne d'arbres (3, ...) s'étend en s'éloignant des deux côtés de l'orifice d'alimentation (9), une première partie (10a) de l'évasement (10) s'étendant entre la surface radiale intérieure (5) de la cavité (1) et la couronne d'arbres (3, ...) et une seconde partie (10b) de l'évasement (10) s'étendant entre la surface radiale extérieure (6) de la cavité (1) et la couronne d'arbres (3, ...), pour que lors de l'exploitation de l'extrudeuse, la surface des éléments d'usinage (4) des arbres (3) rotatifs dans le même sens saillant dans la partie respective de l'évasement (10a, 10b) se déplace en direction du rétrécissement de l'évasement respectif (10a, 10b).

4. Extrudeuse à arbres multiples selon la revendication 3, **caractérisée en ce que** l'orifice de passage est formé par des sections (9b, 9c, 9d, 9e, 9f) ne s'engrenant pas de façon étanche d'éléments d'usinages voisins (3, 4) au moins dans la zone de l'évasement (10).

5. Extrudeuse à arbres multiples selon la revendication 2, **caractérisée en ce que** l'évasement (10) s'étend le long de la périphérie (U) de la couronne d'arbres (3, ... ) , en s'éloignant des deux côtés de l'orifice d'alimentation (9) et qu'il s'étend respectivement entre la surface extérieure radiale (6) de la cavité (1) et la couronne d'arbres (3, ...).

6. Extrudeuse à arbres multiples selon l'une quelconque des revendications précédentes, **caractérisé en ce que** l'extension radiale (ΔR) de l'évasement (10) est maximale dans la zone de l'orifice d'alimentation (9) et qu'à partir de l'endroit axial (A1) où se trouve l'orifice d'alimentation (9), l'évasement (10) se rétrécit le long du sens de transport axial (A) de l'extrudeuse, jusqu'en un endroit axial non évasé (A2).

7. Extrudeuse à arbres multiples selon la revendication 6, **caractérisée en ce que** l'évasement radial se rétrécissant dans le sens de transport axial est constitué de plusieurs évasements de segments individuels (12a, 12b, ..., 12j) qui sont respectivement associés aux segments de cercle (6a).

8. Extrudeuse à arbres multiples selon la revendication 7, **caractérisée en ce que** les évasements de segments (12a, 12b, ..., 12j) sont formés de façon telle que les zones du soufflet (13a, 13b, ..., 13k) entre ou à côté des évasements de segments respectifs (12a, 12b, ..., 12j) ne sont pas évasées.

9. Extrudeuse à arbres multiples selon la revendication 8, **caractérisée en ce que** les évasements de segments (12a, 12b, ..., 12j) sont formés de façon telle, que la projection des surfaces extérieures (14a, 14b, ..., 14j) de l'évasement de segment respectif (12a, 12b, ..., 12j) sur un plan perpendiculaire à la direction axiale (plan de dessin) a la forme approximative d'un croissant (S).

10. Extrudeuse à arbres multiples selon l'une quelconque des revendications 8 ou 9, **caractérisée en ce que** les évasements de segments (12a, 12b, ..., 12j) sont respectivement formés de façon telle, que leur évasement radial Δr le plus grand s'étend vers le point central m de l'arbre respectif (3), dans une direction radiale r qui est retournée d'un angle ϕ dans le sens de rotation D des arbres (3) par rapport à la direction radiale définie par le point central M de l'extrudeuse et le point central m de l'arbre respectif (3).

11. Extrudeuse à arbres multiples selon la revendication 10, **caractérisée en ce que** l'angle ϕ est compris entre environ 20° et 60°.

12. Extrudeuse à arbres multiples selon la revendication 11, **caractérisée en ce que** l'angle ϕ est compris entre environ 30° et 50°.

13. Extrudeuse à arbres multiples selon l'une quelconque des revendications précédentes, **caractérisée en ce qu'**au moins certaines des zones de soufflets (13a, 13b, ..., 13k) sont munies d'un évasement de soufflet (11a, 11b, 11c) dans la zone périphérique de l'évasement (10).

14. Extrudeuse à arbres multiples selon l'une quelconque des revendications 8 à 13, **caractérisée en ce qu'**une vis de gavage est montée sur l'orifice d'alimentation (9).

15. Extrudeuse à arbres multiples selon l'une quelconque des revendications précédentes, **caractérisée en ce que** le carter de l'extrudeuse (2) est muni d'orifices d'aération à proximité de l'orifice d'alimentation (9).

16. Extrudeuse à arbres multiples selon la revendication 8, **caractérisée en ce qu'**une pression inférieure à la pression atmosphérique peut être appliquée à l'orifice d'alimentation (9).
